# EUROPEAN PATENT APPLICATION

(11) **EP 2 034 476 A1**
(43) Date of publication of application: **11.03.2009**
(21) Application number: 08163076.6
(22) Date of filing: 27.08.2008
(51) Int. Cl.: G11B 7/12, G11B 33/14, G11B 7/00, G11B 7/09, G11B 7/135

(54) **Optical pickup apparatus with a metal cover plate that dissipates heat of an electrical lens driving element**

(30) Priority: 04.09.2007 JP 2007228539
(71) Applicant: Funai Electric Co., Ltd., Daito-shi, Osaka 574-0013 (JP)
(72) Inventor: Sasaoka, Hiromasa, Osaka 574-0013 (JP)
(74) Representative: Erny, Tobias

(57) **Abstract**

An optical pickup apparatus (1) comprises: a base (2) on which a movable optical member (6) is disposed; a metal cover (11) mounted on the base (2); and an electrical component (21) which is fixed to the base (2) and used to move the optical member (6). The base (2) is made of resin, and the metal cover (11) touches the electrical component (21) or is connected to the electrical component (21) via a heat-conductive member (11a).

## Description

### BACKGROUND OF THE INVENTION

### Field of the Invention

The present invention relates to an optical pickup apparatus which directs a light beam to an optical recoding medium to allow reading and writing of information, and more particularly, to a structure of an optical pickup apparatus having an optical member which is moved by an electrical component.

### Description of Related Art

Optical recording media such as compact discs (hereinafter, referred to as CD), digital versatile discs (hereinafter, referred to as DVD) etc. have been widely used. Further, in recent years, researches into high-density optical recording media have been carried out to increase the size of data to be recorded on an optical recording media, and optical recording media such as, for example, HD-DVDs and Blu-ray discs (hereinafter, called BD) that can record a large-size data have also been put to practical use. To carry out reading and writing of information from and to such an optical recording medium, an optical pickup apparatus is used.

Some recording media have a plurality of recoding layers to increase the size of recorded data. When carrying out reading and writing of information from and to such an optical recording medium using an optical pickup apparatus, a problem arises that spherical aberration occurs because the respective transparent cover layers to protect the respective recording layers have a thickness different form each other.

Also, in an optical pickup apparatus which is compatible with a plurality of kinds of optical recording media, spherical aberration can occur because the thickness of the transparent cover layer to protect the recording layer of a recoding medium is different form each other depending on the kinds of optical recording media. For example, a CD's transparent cover layer has a thickness of 1.2 mm, a DVD's transparent cover layer has a thickness of 0.6 mm, and a BD's transparent cover has a thickness of 0.1 mm.

The spherical aberration described above becomes often a problem especially in an optical pickup apparatus which uses a light source of the blue family in which an objective lens (objective) having a large numerical aperture (NA) is used, and in recent years, the demand for an optical pickup apparatus which can suitably correct the spherical aberration is increasing. Because of this, conventionally, various propositions have been made for optical pickup apparatuses which have means to correct the spherical aberration.

As correction means for the spherical aberration which has been proposed conventionally, there is a structure in which, for example, a collimate lens is moved in the optical axis direction to change the convergence state or the divergence state of a light beam that enters an objective, thereby the spherical aberration is corrected (e.g., see patent document 1). In this structure, there is an advantage that the spherical aberration can be corrected curbing the increase in the number of optical components.

However, in this structure, because electrical components such as a stepping moor and the like are necessary as means to move the collimate lens in its optical axis direction, a problem arises as follows. Specifically, at the time of driving, heat is generated from the electrical components such as the motor and the like which produce torque with the aid of electromagnetic force (When a stepping motor is used as an electrical component, the heat quantity generated at the time of driving is especially large.). When heat is generated by use of the electrical component, because the optical members are disposed on the same base on which the electrical components (such as the stepping motor and the like) to drive the collimate lens are arranged, the optical members comprising an optical system of the optical pickup apparatus are susceptible to the influence of the heat generated from the electrical components. Consequently, the optical members are bent or susceptible to positional deviation by thermal stress. In recent years, because the optical members are often made of resin for cost reduction, the influence on them caused by the heat generated by the electrical components is great.

To alleviate the heat problem caused by the motor, measures on a spindle motor which rotates an optical disc or on a feed motor which produces driving force to move an optical pickup have been conventionally proposed, (e.g., see patent documents 2 and 3). However, as for optical pickup apparatuses in which the motor (electrical component) is fixed and disposed on the same base as the optical members, structures to improve the influence on optical members caused by the heat generated from a motor have not been reported yet, and the improvement has been demanded.
[patent document 1] JP-A-2005-327396
[patent document 2] JP-A-2003-30922
[patent document 3] JP-A-2006-294187

### SUMMARY OF THE INVENTION

The present invention has been made to cope with the conventional problems, and it is an object of the present invention to provide an optical pickup apparatus which has an electrical component to move an optical member, and has a structure that allows easy radiation of heat generated by use of the electrical component.

To achieve the above object, an optical pickup apparatus according to the present invention comprises: a base on which a movable optical member is disposed; a metal cover mounted on the base; and an electrical component which is fixed to the base and used to move the optical member. The base is made of resin, and the metal cover touches the electrical component or is connected to the electrical component via a heat-conductive member.

According to this structure, because the electrical component touches the metal cover or is connected to the metal cover via the heat-conductive member, it is easy to radiate the heat generated by the electrical component via the metal cover. Accordingly, it is possible to curb the adverse effect, which is caused by the heat generated by use of the electrical component, on the optical member of the optical pickup apparatus.

Also, in the optical pickup apparatus having the above-described structure according to the present invention, a part of the metal cover may be bent to form a bent portion that touches the electrical component. Thus, it is possible to achieve a structure which allows easy radiation of the heat generated by the electrical component via the metal cover without increasing the number of components.

Besides, in the optical pickup apparatus having the above-described structure according to the present invention, the bent portion may be so formed as to have a spring characteristic and the electrical component may be pushed by the bent portion. According to this structure, it is possible to provide the bent potion, which is formed to easily radiate the heat generated by the electrical component, with a function to fix the electrical component, and is also possible to curb the increase in the number of components in the entire apparatus.

Also, in the optical pickup apparatus having the above-described structure according to the present invention, the electrical component may be a stepping motor. Because a stepping motor allows easy control over a movable optical member, it is sometimes used in an optical pickup apparatus. However, a stepping motor has a problem that it releases a large quantity of heat when it is in service. With the structure according to the present invention, it is possible to easily radiate the heat generated by use of a stepping motor and to lower the possibility that the heat adversely affects the optical member.

Further, in the optical pickup apparatus having the above-described structure according to the present invention, the optical member may be a collimate lens. To correct spherical aberration, a structure which moves a collimate lens in its optical axis direction is sometimes employed. In this case, electrical components such as, for example, a stepping motor and the like are incorporated. Also in such a case, according to the present invention, it is possible to achieve a structure which allows easy radiation of the heat generated by use of the electrical components and lowers the possibility that the heat adversely affects the optical component.

As described above, according to the present invention, it is possible to provide an optical pickup apparatus which has an electrical component to move an optical member and allows easy radiation of the heat generated by use of the electrical component.

### BRIEF DESCRIPTION OF THE DRAWINGS

Fig. 1 is a schematic plan view showing a structure of an optical pickup apparatus according to an embodiment of the present invention.
Fig. 2 is a schematic sectional view taken along the A-A line of the optical pickup apparatus shown in Fig. 1.
Fig. 3 is a schematic perspective view showing a structure seen from the rear side of the optical pickup apparatus shown in Fig. 1.
Fig. 4 is a view of the optical pickup apparatus shown in Fig. 3 with an OPU cover removed.
Fig. 5 is a schematic plan view showing a lens drive unit of an optical pickup apparatus.
Fig. 6 is a view to explain a modification of the optical pickup apparatus according to the present embodiment.

### DETAILED DESCRIPTION OF THE PREFERRED EMBODIMENTS

In the following, an embodiment of an optical pickup apparatus according to the present invention is explained in detail referring to the drawings.

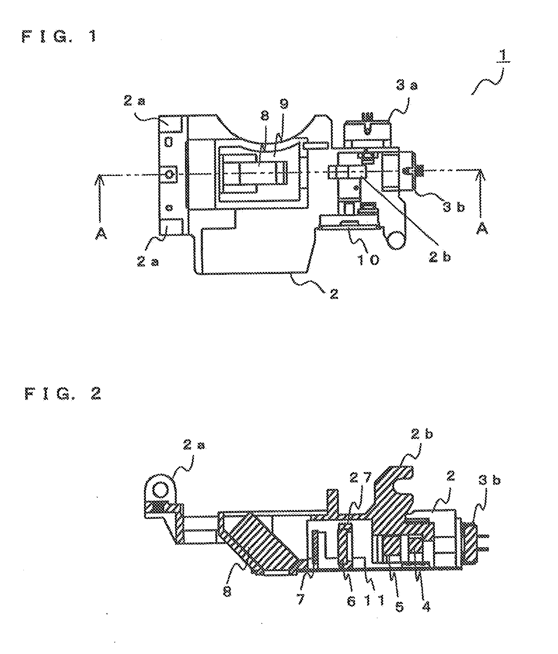

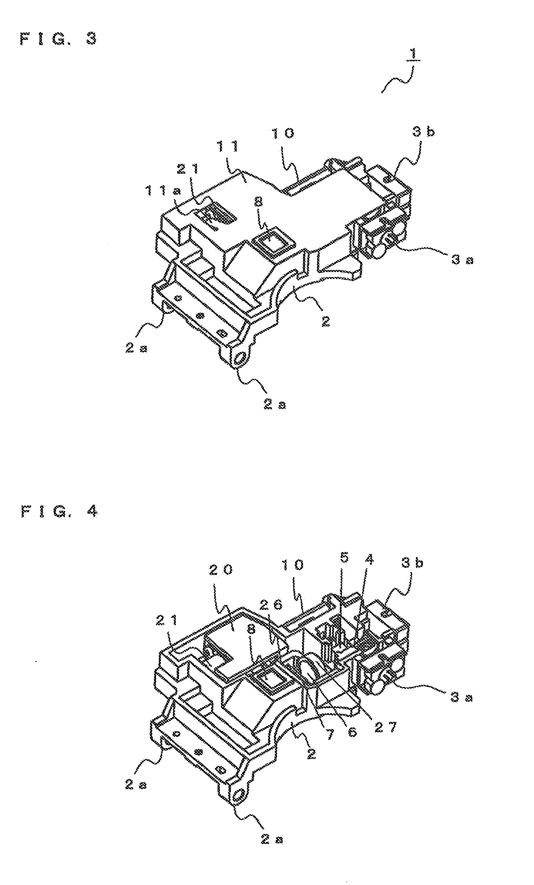

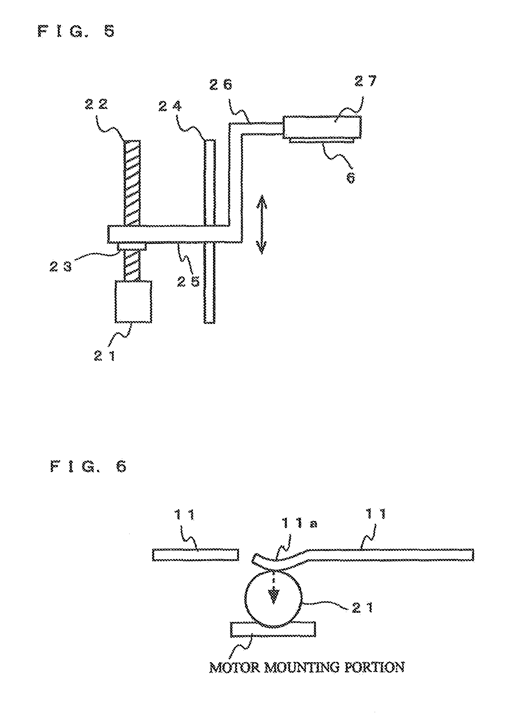

The optical pickup apparatus according to the present embodiment allows data reading and writing by directing a laser light to an optical disc (optical recording medium). Figs. 1 to 5 are views to explain a structure of the optical pickup apparatus according to the present embodiment. In detail, Fig. 1 is a schematic plan view showing a structure of an optical pickup apparatus according to the present embodiment. Fig. 2 is a schematic sectional view taken along the A-A line of the optical pickup apparatus shown in Fig. 1. Fig. 3 is a schematic perspective view showing a structure seen from the rear side of the optical pickup apparatus shown in Fig. 1. Fig. 4 is a view of the optical pickup apparatus shown in Fig. 3 with an OPU (optical pickup) cover removed. Fig. 5 is a schematic plan view showing a lens drive unit of the optical pickup apparatus.

In Figs. 1 to 4, an objective and an objective actuator to incorporate the objective are not shown, because they do not have a direct relationship with a structure of the present invention. Here, an objective actuator is a known actuator which has a lens holder incorporating an objective and moves the lens holder together with the objective in the focus and tracking directions.

As shown in Figs. 1 to 4, an optical pickup apparatus I according to the present embodiment has roughly a slide base 2, two laser diodes 3a and 3b, a photo detector 10, optical members which comprise an optical system that guides the laser light emitted from the laser diodes 3 a and 3b to a laser disc and guides the laser light reflected by the optical disc to the photo detector 10, a lens drive unit 20 which drives a lens that is one of the optical members and is movable, and an OPU (optical pickup) cover 11.

The slide base 2 is made of resin, and the laser diodes 3a and 3b, the optical members, the lens drive unit 20, and the photo detector 10 are mounted on the slide base 2. Besides, on the slide base 2, guide shaft support portions 2a and 2b which are provided with a through-hole or a cutout and allow the optical pickup apparatus 1 to slide along two guide shafts (which are disposed in parallel in the radial direction of an optical disc), not shown, are disposed on the left and right (e.g., see Figs. 1 and 2)

Because the movement of the optical pickup apparatus 1 along the guide shafts is carried out by a known structure where a motor collaborates with a rack and a pinion to use the rotation of the motor for the movement of the optical pickup apparatus 1, the explanation of it is skipped here.

As described above, in the optical pickup apparatus according to the present embodiment, the two laser diodes 3a and 3b are disposed. The first laser diode 3a is a light source which emits a laser light having a wavelength of 405 nm for a BD. The second laser diode 3b is a light source which is compatible with two wavelengths, that is, can emit a laser light having a wavelength of 650 nm for a DVD and a laser light having a wavelength of 780 nm for a CD. As described above, the two laser diodes 3a and 3b are disposed on the slide base 2.

In the present embodiment, the case where the optical pickup apparatus 1 is compatible with the three kinds of disc, that is, a BD, a DVD, and a CD is explained as an example. However, the present invention is not limited to this case. In other words, the number of laser diodes of the optical pickup apparatus and the wavelengths of the laser light emitted from the laser diodes can be suitably changed for purposes.

The optical members disposed on the slide base 2 include, for example, a dichroic prism 4, a beam splitter 5, a collimate lens 6, a liquid crystal device 7, and a raising mirror 8 as shown in Figs. 2 and 4. The optical members disposed on the slide base 2 are only an example, and it is needless to say that various modifications can be made within the purpose of the present invention.

The laser light emitted from the first laser diode 3a is reflected by the dichroic prism 4, and the laser light emitted from the second laser diode 3b passes through the dichroic prism 4. The laser light passing through the dichroic prism 4 passes through the beam splitter 5 and enters the collimate lens 6 which has the function to make the rays of incident laser light parallel to each other.

In the optical pickup apparatus 1, the collimate lens 6 can be moved in its optical axis direction (the left and right directions in Fig. 2). The optical pickup apparatus 1 according to the present embodiment can read and write data from and to a multi-layer optical disc having a plurality of recording layers, and can also read and write data from and to a plurality of kinds of optical discs whose transparent covers have a thickness different from each other, that is, it is so structured as to correct the spherical aberration described above. In the optical pickup apparatus 1, the position of the collimate lens 6 is moved in the optical axis direction to change the convergence state or the divergence state of the laser light that enters the objective, thereby it is possible to correct the spherical aberration.

The movement of the collimate lens 6 in the optical axis direction is carried out by the lens drive unit 20 shown in Fig. 4. The lens drive unit 20 is structured as shown in Fig. 5, for example, but is not limited to this structure if it has a structure that uses a motor to move the collimate lens 6 in the optical axis direction.

As shown in Fig. 5, the lens drive unit 20 has a stepping motor 21, a screw shaft 22, a lead nut 23, a guide shaft 24, a slide portion 25, a connection portion 26, and a lens hold portion 27. The slide portion 25, the connection portion 26, and the lens hold portion 27 are made of resin into a single body. The stepping motor 21 and the guide shaft 24 are fixed to a unit base (not shown) of the lens drive unit 20. Although it is not shown, the lens drive unit 20 is provided with a photo interrupter that can detect the reference position for position adjustment conducted by the stepping motor 21.

The screw shaft 22 is directly connected to the output shaft of the stepping motor 21. It is needless to say that the screw shaft 22 may be connected to the output shaft of the stepping motor 21 via a plurality of gears. The screw shaft 22 gears with the lead nut 23 mounted on the slide portion 25, and the slide portion 25 moves as the screw shaft 22 rotates. As described above, the slide portion 25, the connection portion 26, and the lens hold portion 27 to hold the collimate lens 6 are unitarily formed with each other, and the collimate lens 6 moves as the slide portion 25 moves.

Because the stepping motor 21 can conduct the position control with a small rotation angle responding to a train of pulses, it is suitable for the position adjustment of the collimate lens 6. However, the stepping motor 21 releases a large quantity of heat when it is driven. Accordingly, there is a problem that the heat generated from the stepping motor 21 influences the optical members. However, the optical pickup apparatus 1 according to the present embodiment is so structured as to allow easy radiation of the heat generated from the stepping motor 21, which is explained later.

The laser light passing through the collimate lens 6 enters the liquid crystal device 7. The liquid crystal device 7 has a liquid crystal (not shown), and two transparent electrodes (not shown) which sandwich the liquid crystal. The transparent electrodes of the liquid crystal device 7 are provided with a given electrode pattern, and phase distribution of the incident laser light can be adjusted by adjusting the voltage applied to the transparent electrodes. In the optical pickup apparatus 1, the liquid crystal device 7 is used to carry out the correction of coma aberration and astigmatism.

The laser light passing through the liquid crystal device 7 is reflected by the raising mirror 8 and its traveling direction is changed to the direction perpendicular to the recording layer of an optical disc. The laser light reflected by the raising mirror 8 passes through the through-hole 9 (see Fig. 1) formed through the slide base 2, enters the objective, not shown, and is focused on the recording layer of the optical disc by the objective.

On the other hand, the laser light reflected by the optical disc passes in succession the objective, the raising mirror 8, the liquid crystal device 7, the collimate lens 6, and is reflected by the beam splitter 5 and received by a light, receiving region, not shown, of the photo detector 10. The photo detector 10 transduces the incident light information into an electrical signal and outputs it. The output signal is processed into a reproduction signal, a focus error signal, a tacking error signal etc.

The OPU cover 11 is disposed for the purpose to cope with the dust and stray light problems with the optical members fixed and disposed on the slide base 2, and fixed to the slide base 2. In the optical pickup apparatus according to the present embodiment, the OPU cover 11 is made of metal and so structured as to allow easy radiation of the heat generated from the stepping motor 21. Hereinafter, the structure of the OPU cover 11 that allows easy radiation of the heat generated from the stepping motor 21 is explained.

Referring to Fig. 3, the OPU cover 11 is cut on a part being near and facing the stepping motor 21 into substantially a C shape and the cut part is bent toward the stepping motor 21. A bent portion 11a which is formed by bending the part of the CPU cover 11 is in a state to touch the stepping motor 21. Accordingly, the heat generated from the stepping motor 21 is conducted to the OPU cover 11 via the bent portion 11a and is easily radiated.

Because the position of the stepping motor 21 is away from the optical members, the opening of the OPU cover 11 made to form the bent portion 11a is also away from the optical members. Therefore, although the OPU cover 11 is made an opening on the part, the function of the OPU cover 11 to cope with the dust and stray light problems is not degraded very much.

As described above, in the optical pickup apparatus 1 according to the present embodiment, the heat generated from the stepping motor 21 is easily radiated via the bent portion I lea of the OPU cover 11. Accordingly, despite the structure where the slide base 2 is made of resin, and the stepping motor 21 and the optical members are disposed on the slide base 2, the optical members are not easily adversely affected by the heart.

The embodiment explained above is an example, and the present invention is not limited to the above-explained embodiment and various modifications can be made within the purpose of the present invention.

In the optical pickup apparatus 1 according to the present embodiment, it is so structured that the bent portion 11a of the OPU cover 11 only touches the stepping motor 21. However, it may be so structured that a spring characteristic is given to the bent portion 11a for another function. Specifically, as shown in Fig. 6, the bent portion 11a having the spring characteristic may be so structured as to push the stepping motor 21 against the motor mounting portion (which is formed, for example, on the slide base 2). With this structure, it is possible to securely fix the stepping motor 21 at the mounting position with the aid of the bent portion 11a.

In the present embodiment, the stepping motor 21 is fixed to the lens drive unit 20 with screws as one of the components of the lens dive unit 20. And the stepping motor 21 is fixed to the slide base 2 by fixing the lens drive unit 20 to the slide base 2. In this structure, the effect of the bent portion 11a a which is formed to have the spring characteristic as described above is not necessarily great. However, for cost reduction, it can be thought that the components comprising the lens drive unit 20 are directly mounted on the slide base 20. In such a structure, it is a great advantage to give the spring characteristic and the function to the bent portion 11a of the OPU cover 11 to fix the stepping motor 21.

Fig. 6 is a view to explain an modification of the optical pickup apparatus according to the present embodiment, that is, a schematic view showing schematically the relationship between the OPU cover 11 and the stepping motor 21. The spring characteristic can be obtained by adjusting the shape of the bent portion 11a and by selecting a material of the bent portion 11a.

In the present embodiment, employed is the where the part of the OPU cover 11 is bent to form the bent portion 11a, and the bent portion 11a is made to touch the stepping motor 21, and thereby the heat generated from the stepping motor 21 is easily radiated via the OPU cover 11, However, the present invention is not limited to this structure. In other words, a metal heat-conductive member may be disposed between the OPU cover 11 and the stepping motor 21 to connect the OPU cover 11 and the stepping motor 21 via the heat-conductive member. In this structure, it is also possible to obtain a structure which easily radiates the heat generated from the stepping motor 21 via the OPU cover 11. If the OPU cover 11 is disposed near the stepping motor 21, resin such as a heat-conductive adhesive, grease and the like may be used instead of the metal heat-conductive member.

In the present embodiment, the example where the optical member moved by the stepping motor 21 is the collimate lens 6 is explained. The present invention is not limited to this structure. In other words, for example, the present invention can be applied to a structure where an expander lens is moved by the stepping motor.

In the present embodiment, the where the electrical component to move the optical member is the stepping motor is explained. But it is not limited to this structure, that is, the present invention can be applied to an optical pickup apparatus which has a structure to move the optical member using a DC motor and other electrical components that release heat.

According to the present invention, in the optical pickup apparatus having an electrical component to move an optical member, because the adverse effect which is caused by the heat generated from the electrical component and to which the optical member is susceptible can be curbed, and the present invention is a useful technology.

Features, components and specific details of the structures of the above-described embodiments may be exchanged or combined to form further embodiments optimized for the respective application, As far as those modifications are readily apparent for an expert skilled in the art they shall be disclosed implicitly by the above description without specifying explicitly every possible combination, for the sake of conciseness of the present description,

## Claims

1. An optical pickup apparatus, comprising:
a base on which a movable optical member is disposed;
a metal cover mounted on the base; and
an electrical component which is fixed to the base and used to move the optical member,
wherein the base is made of resin, and the metal cover touches the electrical component or is connected to the electrical component via a heat-conductive member.

2. The optical pickup apparatus according to claim 1, wherein a part of the metal cover is bent to form a bent portion and the bent portion touches the electrical component.

3. The optical pickup apparatus according to claim 2, wherein
the bent portion is formed to have a spring characteristic, and
the electrical component is pushed by the bent portion,

4. The optical pickup apparatus according to any one of claims 1 to 3, wherein the electrical component is a stepping motor.

5. The optical pickup apparatus according to any one of claims I to 4, wherein the optical member is a collimate lens.
